# EUROPÄISCHE PATENTANMELDUNG

(11) **EP 1 445 451 A2**
(43) Veröffentlichungstag der Anmeldung: **11.08.2004**
(21) Anmeldenummer: 03029365.8
(22) Anmeldetag: 07.01.2004
(51) Int. Cl.: F02D 9/04, F02D 9/10

(54) **Drosselanordnung sowie Abgasanlage mit einer derartigen Drosselanordnung**

(30) Priorität: 04.02.2003 DE 10304364
(71) Anmelder: J. Eberspächer GmbH & Co. KG, 73730 Esslingen (DE)
(72) Erfinder: Damson, Björn, Dr., 70569 Stuttgart (DE); Zacke, Peter, Dr., 73095 Albershausen (DE)

(57) **Zusammenfassung**

Die Erfindung betrifft eine Drosselanordnung, insbesondere in einer Abgasanlage für einen Verbrennungsmotor. Die Drosselanordnung (14) hat eine Drosselklappe (26) zum Drosseln des Volumenstroms eines durch ein Rohr (10) strömenden Fluides, wobei die Drosselklappe (26) zwischen einer geschlossenen Stellung, in die sie vorgespannt ist, um einen vorgegebenen Querschnittsbereich des Rohres (10) zumindest teilweise zu verschließen, und einer offenen Stellung, in der die Drosselklappe (26) den Querschnittsbereich des Rohres (10) durch die Wirkung des Fluiddrucks gegen die Vorspannkraft freigibt, um eine Schwenkachse (20) in das Rohr (10) schwenkbar ist. Die Schwenkachse (20) ist erfindungsgemäß seitlich versetzt zu dem von der Drosselklappe (26) zu verschließenden Querschnittsbereich des Rohres (10) angeordnet, während an der Drosselklappe (26) mindestens ein Abstandshalter (22) vorgesehen ist, mit dem die Drosselklappe (26) in einem vorgegebenen Abstand zur Schwenkachse (20) an der Schwenkachse (20) derart gelagert ist, dass die Drosselklappe (26) in ihrer offenen Stellung vom Fluid beidseitig umströmt ist. Des weiteren Betrifft die Erfindung eine Abgasanlage (12) mit einer derartigen Drosselanordnung (14).

## Beschreibung

Die Erfindung betrifft eine Drosselanordnung nach dem Oberbegriff des Anspruchs 1, die insbesondere in einer Abgasanlage für einen Verbrennungsmotor eingesetzt werden kann. Ferner betrifft die Erfindung eine Abgasanlage mit einer derartigen Drosselanordnung.

Eine Drosselanordnung der eingangs genannten Art wird bevorzugt in Abgasanlagen für Verbrennungsmotoren eingesetzt, um den Abgasstrom in der Abgasanlage bis zu einem vorgegebenen Staudruck definiert zu stauen. Die Drosselklappe verschließt hierzu einen vorgegebenen Querschnittsbereich der Abgasanlage und gibt diesen erst frei, wenn der Staudruck des Abgasstromes einen vorgegebenen Wert übersteigt.

Das Verstellen der Drosselklappe kann durch Aktuatoren, wie elektrische Steilmotoren, erfolgen, die üblicherweise von der Motorregelung des Verbrennungsmotors angesteuert werden. Eine derartige fremdbetätigte Drosselanordnung ist beispielsweise in der US 5,709,241 beschrieben. Des weiteren sind Drosselanordnungen bekannt, bei denen die Drosselklappe mit einer durch Unterdruck anzusteuernden Unterdruckdose als Aktuator gekoppelt ist. Die Unterdruckdose wird gleichfalls von der Motorsteuerung zum Öffnen und Schließen der Drosselklappe betätigt.

Nachteilig an diesen fremdbetätigten Drosselanordnungen ist, dass der Aktuator aufgrund seiner fehlenden Hitzebeständigkeit üblicherweise außerhalb der Abgasanlage angeordnet sein muß und die Kopplung des Aktuators mit der in der Abgasanlage angeordneten Drosselklappe folglich durch eine entsprechend ausgebildete Durchführung an der Abgasanlage erfolgen muß. Diese Art der Ansteuerung der Drosselklappe ist einerseits sehr kostspielig, andererseits besteht die Gefahr der Entstehung von Undichtigkeiten an der Durchführung in die Abgasanlage. Die als Aktuatoren verwendeten Unterdruckdosen sind ferner nur in der Lage, die Drosselklappe entweder vollständig geschlossen oder vollständig geöffnet zu halten, während Zwischenstellungen der Drosselklappe mit Hilfe der Unterdruckdose nicht einstellbar sind.

Des weiteren sind Drosselanordnungen bekannt, bei denen die Drosselklappe lediglich in ihre geschlossene Stellung, in der sie den vom Fluid zu durchströmenden Querschnittbereich des Rohres verschließt, beispielsweise durch ein Federelement mechanisch vorgespannt ist und sich gegen die Wirkung der Vorspannkraft durch den an ihr wirkenden Staudruck selbsttätig öffnet.

Derartiger Drosselanordnungen mit selbsttätig öffnenden Drosselklappen werden insbesondere eingesetzt, um die Akustik in Abgasanlagen gezielt zu beeinflussen. Zu diesem Zweck ist in der Abgasanlage wenigstens ein Abgasstrang oder Strömungsweg für das Abgas vorgesehen, wobei bei niedrigem Staudruck des Abgases der Abgasstrang durch die mechanisch vorgespannte Drosselklappe zumindest teilweise verschlossen werden kann. Bei zunehmenden Staudruck öffnet sich die Drosselklappe selbsttätig und ermöglicht so, dass das Abgas durch den Abgasstrang hindurchströmen kann, wobei der Staudruck des Abgases und gleichzeitig die Strömungsgeräusche des durch die Abgasanlage strömenden Abgases verringert werden.

Derartige Drosselanordnungen, die zur Beeinflussung der Akustik einer Abgasanlage zum Einsatz kommen, sind beispielsweise aus der DE 199 35 711 C1, der DE 195 20 157 A1, der EP 0 902 171 A2, der US 5,739,483 oder der US 5,801,343 bekannt.

Den in diesen Druckschriften beschriebenen Drosselanordnungen ist gemeinsam, dass jede der verwendeten Drosselklappen durch ein elastisches Spannelement, wie eine Torsionsfeder, in ihre geschlossene Stellung vorgespannt ist und mit zunehmenden Staudruck des Abgases öffnet. Durch die Art der Lagerung der Drosselklappe kommt es jedoch mit zunehmenden Öffnungsgrad der Drosselklappe zu einer Zunahme der von der Feder verursachten Vorspannkraft, Die mit zunehmenden Öffnungsgrad der Drosselklappe zunehmende Vorspannkraft hat wiederum zur Folge, dass der für das Offenhalten der Drosselklappe erforderliche Staudruck gleichfalls zunehmen muß, wodurch die Strömungsgeschwindigkeit des Abgases reduziert wird.

Es ist Aufgabe der Erfindung, eine Drosselanordnung, insbesondere in einer Abgasanlage für einen Verbrennungsmotor bzw. eine Abgasanlage, in der eine derartige Drosselanordnung vorgesehen ist, anzugeben, bei der über einen vorgegebenen Öffnungsbereich der Drosselklappe bei verhältnismäßig geringem Staudruck die Drosselklappe sich selbsttätig öffnet.

Die Erfindung löst die Aufgabe durch eine Drosselanordnung mit den Merkmalen nach Anspruch 1. Ferner löst die Erfindung die Aufgabe durch eine Abgasanlage mit den Merkmalen nach Anspruch 12.

Die erfindungsgemäße Drosselanordnung zeichnet sich insbesondere durch die Lage der Schwenkachse relativ zu dem von der Drosselklappe zu verschließenden Querschnittsbereich des Rohres einerseits, und der Stellung der geöffneten Drosselklappe im Fluidstrom andererseits aus.

So wird durch die seitlich versetzte Anordnung der Schwenkachse erreicht, dass der Staudruck an der geschlossenen Drosselklappe lediglich ein in die Öffnungsrichtung der Drosselklappe gerichtetes Öffnungsdrehmoment bewirkt, welches dem von der Vorspannkraft erzeugten Schließmoment entgegenwirkt. Hierdurch wird verhindert, dass sich durch den Staudruck gleichzeitig ein in Richtung des Schließmomentes wirkendes Stützmoment entsteht, welches sich zwangsläufig ergibt, wenn die Schwenkachse im zu verschließenden Öffnungsbereich des Rohres angeordnet ist, wie im Stand der Technik üblich. Da der Staudruck lediglich ein Öffnungsdrehmoment, nicht jedoch zusätzlich ein von der Stellung der Drosselklappe relativ zur Schwenkachse und dem Staudruck abhängiges Stützmoment bewirkt, muß mit dem Staudruck für das Öffnen der Drosselklappe nur das durch die Vorspannkraft eindeutig definierte Schließdrehmoment überwunden werden, so dass sich schon für das Öffnen der Drosselklappe ein eindeutiger Staudruck vorgeben läßt.

Sobald die Drosselklappe geringfügig geöffnet ist, strömt der Fluidstrom an der Drosselklappe vorbei, wobei das Fluid die Drosselklappe durch die erfindungsgemäße Positionierung der Drosselklappe im durchströmten Rohr beidseitig umströmt. Hierdurch wird der Fluidstrom im wesentlichen nur durch die vom Fluidstrom direkt angeströmte Vorderseite der Drosselklappe gestaut, während der an der Rückseite vorbeiströmende Fluidstrom die Drosselklappe von ihrer Rückseite her abstützt. Mit zunehmender Strömungsgeschwindigkeit wird die Drosselklappe weiter geöffnet, da die Stützwirkung an der Rückseite der Drosselklappe abnimmt, während sich gleichzeitig die vom Fluid angeströmte Fläche an der Vorderseite der Drosselklappe mit zunehmenden Öffnungsgrad der Drosselklappe verkleinert. Durch die Verkleinerung der angeströmten Fläche wird erreicht, dass trotz zunehmender Strömungsgeschwindigkeit der im Fluidstrom wirkende Staudruck zumindest über einen großen Öffnungsbereich der Drosselklappe konstant bleibt, wie Versuchsreihen gezeigt haben. Nimmt die Strömungsgeschwindigkeit wieder ab, bleibt der Staudruck gleichfalls konstant.

Des weiteren wurde in den Versuchsreihen ein hysteresisches Schließverhalten der erfindungsgemäßen Drosselanordnung beobachtet, bei der sich die Änderung des Öffnungsgrades der Drosselklappe bei zunehmender Strömungsgeschwindigkeit des Fluidstroms von der Änderung des Öffnungsgrades der Drosselklappe bei abnehmenden Strömungsgeschwindigkeit unterschieden hat. Die Verwendung derartiger Drosselanordnungen mit hysteresischem Schließverhalten ist insbesondere bei Abgasanlagen für Verbrennungsmotoren von Vorteil, bei denen ein Pulsieren der Strömungsgeschwindigkeit des Abgases in der Abgasanlage durch den Betrieb des Verbrennungsmotors auftritt und das verzögerte Schließen der Drosselklappe Schwankungen im Volumenstrom ausgleicht. Des weiteren kann mit dem vom hysteresischen Schließverhalten der Drosselklappe verursachten verzögerten Öffnen und Schließen der Drosselklappe erreicht werden, dass Abgasströme mit hohem Durchsatz, bei denen sich zeitverzögert eine Temperaturänderung ergibt, durch die Drosselklappe zeitlich verzögert einer Kühleinheit zugeführt werden.

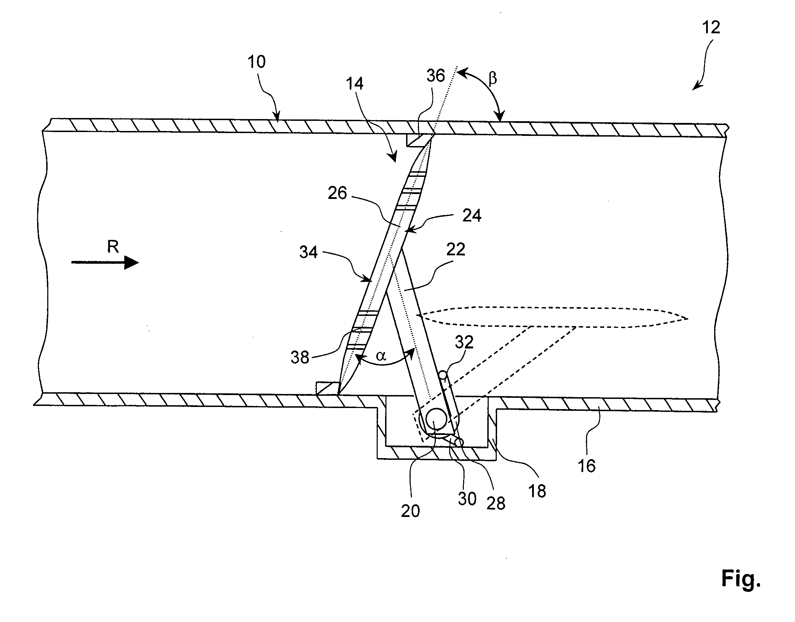

Weitere Vorteile der Erfindung ergeben sich aus der nachfolgenden Beschreibung, den Unteransprüchen und der Zeichnung.

So wird bei einer besonders bevorzugten Ausführungsform der erfindungsgemäßen Drosselanordnung vorgeschlagen, an dem vom Fluid zu durchströmenden Rohr eine seitliche Ausnehmung vorzusehen, in der die Schwenkachse gelagert ist. Die Ausbildung einer derartigen Ausnehmung hat den Vorteil, dass die Schwenkachse in dem abgeschlossenen Bereich des Rohres angeordnet ist, der vom Fluid durchströmt werden soll. Hierdurch kann auf die Ausbildung von Durchführungen für den Abstandshalter der Drosselklappe, die abgedichtet werden müssen, verzichtet werden.

Des weiteren wird vorgeschlagen, dass die Drosselklappe in ihrer geschlossenen Stellung unter einem vorgegebenen Winkel angestellt zur Strömungsrichtung des Fluides verläuft. Durch die angestellte Anordnung der Drosselklappe wird erreicht, dass das von dem Staudruck an der der Drosselklappe erzeugte Öffnungsdrehmoment geringer ist als wenn der Staudruck normal zur Oberfläche der Drosselklappe wirkt, da nur der rechtwinklig zur Schwenkachse wirkende Kraftanteil der durch den Staudruck verursachten Druckkraft ein Öffnungsdrehmoment bewirkt.

Bei einer besonders bevorzugten Ausführungsform der Drosselanordnung steht der mindestens eine Abstandshalter unter einem vorgegebenen Winkel von der Rückseite der Drosselklappe ab. Durch die abgewinkelte Anordnung des Abstandshalters kann definiert vorgegeben werden, wie hoch der Anteil der vom Staudruck verursachten Druckkraft ist, der ein Öffnungsdrehmoment an der Drosselklappe um die Schwenkachse bewirkt.

Um eine gleichmäßige Verteilung des an der Drosselklappe wirkenden Staudrucks auf den Abstandshalter zu erreichen, wird ferner vorgeschlagen, den Abstandshalter zumindest annähernd mittig an der Drosselklappe vorzusehen.

Ferner ist es von Vorteil, wenn der Querschnitt der Drosselklappe in Richtung quer zur Schwenkachse gesehen ein tragflächenförmiges Profil aufweist. Durch das im Querschnitt tragflächenförmige Profil der Drosselklappe wird erreicht, dass das Fluid ohne die Ausbildung turbulenter Strömungen an der Oberfläche der Drosselklappe entlangströmen kann. Ferner kann durch eine entsprechende Querschnittsgestaltung des Profils erreicht werden, dass an der Rückseite der Drosselklappe ein geringere Strömungsdruck wirkt als an der Vorderseite der Drosselklappe, wodurch das Öffnungsverhalten der Drosselklappe gezielt beeinflußt werden kann. In vollständig geöffnetem Zustand, bei dem die Drosselklappe in ihrer Längsrichtung gesehen vorzugsweise parallel zur Strömungsrichtung des Fluides verläuft wird durch die tragflächenförmige Profilform der Strömungswiderstand der im Fluidstrom stehenden Drosselklappe minimiert, wodurch die Ausbildung turbulenter Strömungen im Querschnittsbereich des Rohres verhindert sowie ein Anregen der Drosselklappe zum Schwingen vermieden wird.

In Einzelfällen, beispielsweise beim Einsatz der Drosselanordnung in Abgasanlagen, ist es von Vorteil, wenn die Drosselklappe den Fluidstrom nicht vollständig unterbricht. In derartigen Fällen wird vorgeschlagen, die Drosselklappe zusätzlich mit mehreren Strömungskanälen zu versehen, welche sich bei geschlossener Drosselklappe vorzugsweise in Strömungsrichtung des Fluides erstrecken. Hierdurch wird erreicht, dass trotz geschlossener Drosselklappe ein von der Anzahl und den Strömungsquerschnitten der Strömungskanäle abhängiger Volumenstrom des Fluides durch die geschlossene Drosselklappe strömen kann, ohne dass hierzu die Drosselklappe geöffnet werden muß. Erst wenn der Staudruck des Fluidstroms im Rohr so groß, dass der Druckabfall, der von dem durch die Strömungskanäle in der Drosselklappe strömenden Volumenstrom des Fluides verursacht wird, nicht mehr ausreicht, den Staudruck unter den für das Geschlossenhalten der Drosselklappe noch zulässigen Staudruck zu reduzieren, öffnet sich die Drosselklappe.

Damit die Drosselklappe in ihrer geschlossenen Stellung eine eindeutige Lage zum Querschnittsbereich des Rohres einnimmt, wird ferner vorgeschlagen, an dem abzudichtenden Querschnittsbereich Dichtungselemente vorzusehen, an welchen die Drosselklappe in ihrer geschlossenen Stellung dichtend anliegt. Durch die Verwendung von Dichtungselementen kann, sofern dies gewünscht ist, bei ausreichend hoher Vorspannkraft auch ein nahezu vollständiges Abdichten des Rohres durch die Drosselklappe erreicht werden.

Die Drosselklappe ist bei einer bevorzugten Ausführungsform der Drosselanordnung durch ein elastisches Spannelement vorgespannt, das sich am Abstandshalter bzw. der Drosselklappe einerseits und am Rohr andererseits abstützt und auf diese Weise die Drosselklappe in ihre geschlossene Stellung vorspannt. Als Spannelement wird hierzu besonders bevorzugt die Verwendung einer auf die Schwenkachse aufgeschobene Torsionsfeder vorgeschlagen. An Stelle der Verwendung eines elastischen Spannelementes ist jedoch auch die Verwendung eines magnetischen Halteelementes, beispielsweise eines Permanentmagneten, möglich, welches die Drosselklappe mit einer vorbestimmten Magnetkraft in die geschlossene Stellung vorspannt.

Die Drosselklappe der Drosselanordnung ist üblicherweise unmittelbar im Rohrquerschnitt angeordnet, so dass die Drosselklappe einen Querschnittsbereich im Rohr verschließen kann, um das Fluid im Rohrquerschnitt zu stauen.

In besonderen Anwendungsfällen, beispielsweise wenn die Drosselanordnung zum Verschließen eines Rohrstutzens in einer Kammer einer Abgasanlage eingesetzt werden soll, um das Akustikverhalten der Abgasanlage zu beeinflussen, wird vorgeschlagen, dass mit der Drosselklappe die Eintrittsöffnung des Rohres als Querschnittsbereich verschlossen wird. Die Drosselklappe ist dabei so am Rohr angelenkt, das sie bei ausreichendem Staudruck nach innen in die Eintrittsöffnung des Rohrs schwenkt.

In bestimmten Anwendungsfällen kann es ferner erforderlich sein, ein stufenweises Öffnen des Rohres mit der erfindungsgemäßen Drosselanordnung zu erreichen. In derartigen Fällen kann in Strömungsrichtung des Fluides gesehen vor oder hinter der Drosselklappe der erfindungsgemäßen Drosselanordnung im Rohr eine weitere Drosselklappe vorgesehen sein. Auch diese Drosselklappe kann in der zuvor beschriebenen erfindungsgemäßen Weise ausgebildet, kann jedoch in herkömmlicher Weise gestaltet sein. Die Verwendung mehrerer hintereinander angeordneter Drosselklappen ist insbesondere dann sinnvoll, wenn unmittelbar vor der Drosselklappe am Rohr eine Rohrabzweigung vorgesehen ist, so dass das Fluid zunächst über diese Rohrabzweigung abströmen kann. Die Drosselklappe öffnet dann erst, wenn der durch die Strömungsgeschwindigkeit verursachte Staudruck ausreichend hoch ist.

Gemäß einem weiteren Aspekt betrifft die Erfindung eine Abgasanlage für die Abgase von Verbrennungsmotoren, in der zumindest eine erfindungsgemäße Drosselanordnung vorgesehen ist. Die Abgasanlage weist hierzu mindestens zwei Abgasstränge auf, wovon wenigstens einer der Abgasstränge mit der erfindungsgemäßen Drosselanordnung versehen ist und den von ihr verschlossenen Abgasstrang erst ab einem vorgegebenen Staudruck des Abgases in der Abgasanlage öffnet.

Eine derartige erfindungsgemäße Abgasanlage ist beispielsweise für die Erhöhung der effektiven Nutzung von mit Edelmetallen versehenen Katalysatoren verwendbar. So kann für den Teillastbetrieb des Verbrennungsmotors und niedrigen Abgastemperaturen ein kleiner relativ stark beschichteter Katalysator eingesetzt werden, der mit dem nicht von der Drosselklappe verschließbaren Abgasstrang verbunden ist. Nimmt der Abgasdurchsatz und damit die Abgastemperatur zu, gibt die Drosselklappe den weiteren Abgasstrang frei, so dass das Abgas einem weiteren, weniger stark beschichteten Katalysator oder einem sich an den anderen, stark beschichteten Katalysator anschließenden Katalysatorbereich gezielt zugeführt wird.

Eine besonders bevorzugte Anwendungsmöglichkeit der erfindungsgemäßen Drosselanordnung in der Abgasanlage ist deren Einsatz als Akustikklappe. So wird mit der Drosselklappe bei geringen Abgasdurchsätzen einer der beiden Abgasstränge verschlossen. Nimmt Abgasdurchsatz zu, nehmen auch die entstehenden Strömungsgeräusche in der Abgasanlage zu. Ist der Abgasdurchsatz ausreichend hoch, so dass der vom Abgas in der Abgasanlage erzeugte Staudruck ausreichend hoch ist, die Drosselklappe zu öffnen, strömt ein Teil des Abgases durch den zuvor von der Drosselklappe verschlossenen Abgasstrang. Hierbei ist die erfindungsgemäße Drosselklappe in der Lage, den in den von ihr gesteuerten Abgasstrang einströmenden Volumenstrom des Abgases in Abhängigkeit vom Abgasdurchsatz variabel steuern. Auf diese Weise ist eine an den aktuellen Abgasdurchsatz angepaßte Reduzierung der Schallemissionen der Abgasanlage auf einfache und elegante Weise möglich.

Eine weitere Anwendungsmöglichkeit besteht in dem Einsatz der erfindungsgemäßen Drosselanordnung in einer Abgasanlage zur Temperaturregelung für die Reduzierung der NOₓ-Belastung. Hierzu wird vorgeschlagen, dass der mit der erfindungsgemäßen Drosselklappe versehene Abgasstrang als Bypass dient, mit dem der Abgasstrom parallel an einem mit dem anderen Abgasstrang verbundenen NOₓ-Speicherkatalysator der Abgasanlage zunächst einem Abgaskühler zuzuleiten ist, von dem der abgekühlte Abgasstrom dem NOₓ-Speicherkatalysator anschließend zugeleitet wird. So hat sich gezeigt, dass sich das Abgas bei niedrigen Drehzahlen des Verbrennungsmotors und einem verhältnismäßig geringem Abgasdurchsatz weniger stark erwärmt, so dass das Abgas dem NOₓ-Katalsysator unmittelbar zugeführt werden kann. Nimmt dagegen der Abgasdurchsatz zu, erhöht sich auch die Abgastemperatur. In dem in Abhängigkeit vom Abgasdurchsatz und dem vom Abgas in der Abgasanlage erzeugten Staudruck der mit dem Abgaskühler verbundene Abgasstrang von der erfindungsgemäßen Drosselklappe geöffnet wird, kann dass heiße Abgas zunächst gekühlt werden, bevor es einem NOₓ-Katalysator zugeführt wird.

Eine weitere Anwendungsmöglichkeit stellt der Einsatz der mit der erfindungsgemäßen Drosselanordnung versehenen Abgasanlage zur Drehmomentoptimierung dar. So werden Drosselklappen in Abgasanlagen insbesondere bei Motorrädern zur Drehmomentoptimierung eingesetzt. Hierzu wird der Überdruckimpuls, der beim Öffnen der Auslaßventils am Verbrennungsmotor entsteht, von der geschlossenen Drosselklappe als Unterdruckimpuls derart reflektiert, dass der Unterdruckimpuls kurz vor Schließen des Auslaßventils bei diesem eintrifft und das Entleeren des Brennraumes unterstützt, wodurch sich eine Optimierung des Drehmomentes ergibt. Für eine feste Geometrie der Abgasanlage läßt sich diese Wirkungsweise jedoch nur für bestimmte Lastzustände des Verbrennungsmotors erreichen. Durch die erfindungsgemäße Drosselklappe kann in Abhängigkeit von der Drehzahl des Verbrennungsmotors bei unterschiedlichen Abgasdurchsätzen die Geometrie der Abgasanlage, d.h. die vom Abgas zu durchströmende Länge, definiert variiert werden, um den Ort, an dem der Überdruckimpuls reflektiert wird, für eine Drehmomentoptimierung definiert zu verlagern.

Des weiteren wird vorgeschlagen, die Wärme des Abgases zum Heizen des Fahrzeuges zu verwenden. Hierzu wird das Abgas bei niedrigen Abgasdurchsätzen mit Hilfe der Drosselklappe einem Wärmetauscher zugeleitet, in dem das Abgas seine Wärme an das Kühlmittel des Kühlmittelkreislaufes oder das Öl des Ölkreislaufes des Verbrennungsmotors abgibt. Hierdurch wird einerseits der Motor und andererseits die üblicherweise mit dem Wärmetauscher gekoppelte Fahrzeugheizung zusätzlich erwärmt. Bei hohen Abgasdurchsätzen gibt die Drosselklappe dagegen den weiteren Abgasstrang frei, so dass das Abgas am Wärmetauscher vorbeigeleitet wird, um einen zusätzlichen Wärmeeintrag in das Kühlmittel zu verhindern.

Auch bei Abgasanlagen mit Rußfiltern ist die erfindungsgemäße Drosselanordnung einsetzbar. So sind für die Regeneration des Rußfilters, also das Abbrennen des Rußes, hohe Temperaturen notwendig, die in vielen Lastzuständen nicht erreicht werden. Um das Abgas auf die gewünschte Regenerationstemperatur zu erwärmen, werden üblicherweise Heizeinrichtung eingesetzt, die jedoch aufgrund des hohen Massenstroms des Abgases eine entsprechend ausreichend hohe Heizleistungen besitzen müssen. Mit Hilfe der Drosselklappe kann bei einem ausreichend hohen Abgasdurchsatz ein Abgasstrang der Abgasanlage freigegeben werden, so dass der Abgasdurchsatz im benachbarten Abgasstrang vermindert ist. Der durch den benachbarten Abgasstrang strömende, verminderte Massenstrom des Abgas kann dann mit Hilfe einer vergleichsweise klein dimensionierten Heizeinrichtung auf die für den mit diesem Abgasstrang in Strömungsverbindung stehenden Rußfilter erforderliche Regenerationstemperatur erwärmt werden. Nimmt der Abgasdurchsatz wieder ab, verschließt die Drosselklappe den weiteren Abgasstrang zumindest teilweise, so dass das durch diesen weiteren Abgasstrang noch hindurchströmende Abgas auf die Regenerationstemperatur erwärmt werden kann, um den sich an den weiteren Abgasstrang anschließenden Rußfilter zu regenerieren.

Weitere Merkmale und Vorteile der Erfindung ergeben sich aus der folgenden Beschreibung eines bevorzugten Ausführungsbeispiels, wobei Bezug auf die beigefügte Zeichnung genommen wird.

In dieser zeigt die einzige Figur eine geschnittene Ansicht eines Abschnittes eines Abgasstranges einer Abgasanlage mit einer erfindungsgemäßen Drosselanordnung.

In der einzigen Figur ist ein Abschnitt eines Abgasstranges 10 einer Abgasanlage 12 dargestellt. Der Abgasstrang 10 dient als Strömungskanal für Abgas und kann durch eine erfindungsgemäße Drosselanordnung 14 verschlossen werden, die den Abgasstrang 10 erst ab einem vorgegebenen Staudruck des Abgases mit zunehmender Strömungsgeschwindigkeit kontinuierlich freigibt, wie später im Detail noch erläutert werden wird.

Der Abgasstrang 10 hat einen etwa rechteckigen Strömungsquerschnitt, der von der Drosselanordnung 14 verschlossen werden kann. Je nach Einsatzzweck kann der Abgasstrang 10 jedoch anstelle eines rechteckigen Strömungsquerschnittes auch einen runden, ovalen oder mehreckigen Strömungsquerschnitt besitzen.

An seiner in der Figur rechts dargestellten Seitenwand 16 hat der Abgasstrang 10 eine Ausnehmung 18, welche seitlich an die Seitenwand 16 des Abgasstranges 10 gasdicht angeschweißt ist. In der Ausnehmung 16 ist eine etwa quer zur Längsrichtung des Abgasstranges 10 verlaufende Schwenkachse 20 der Drosselanordnung 14 befestigt, die in der Figur lotrecht zur Papierebene dargestellt ist.

An der Schwenkachse 20 sind zwei parallel zueinander beabstandete, identisch ausgebildete Haltebügel 22 als Abstandshalter mit ihren jeweils einen Enden schwenkbar gelagert, wobei in der Figur aus Darstellungsgründen nur einer der Haltebügel 22 zu sehen ist. Am anderen Ende sind die beiden Haltebügel 22 gemeinsam an der Rückseite 24 einer rechteckigen Drosselklappe 26 mittig befestigt. Die Haltebügel 22 stehen dabei so von der Drosselklappe 26 ab, dass sie mit ihren Längsrichtungen unter einem vorgegebenen Winkel α geneigt zur Längsrichtung der Drosselklappe 26 verlaufen. Der Winkel α ist dabei so gewählt, dass die Drosselklappe 26 in ihrer geschlossenen Stellung, so wie sie in der Figur in durchgezogener Linie dargestellt ist, mit ihrer Längsrichtung unter einem Winkel β geneigt zur Längsrichtung des Abgasstranges 10 und damit unter dem Winkel β geneigt zur Strömungsrichtung R des Abgases verläuft.

Des weiteren ist auf die Schwenkachse 20 eine Torsionsfeder 28 aufgeschoben. Die Torsionsfeder 28 stützt sich mit ihrem einen Schenkel 30 an der Innenwand der Ausnehmung 18 ab, während sie gleichzeitig mit ihrem anderen Schenkel 32 unter Vorspannung an einem der Haltebügel 22 anliegt und die Drosselklappe 26 in ihre geschlossene Stellung mechanisch vorspannt. Dabei kommt die Drosselklappe 26 mit den Kantenbereichen ihrer Vorderseite 34 an im Abgasstrang 10 nach innen abstehenden Dichtungselementen 36 zur Anlage.

Wie die Figur weiter zeigt, sind die Vorderseite 34 und die Rückseite 24 der Drosselklappe 26 quer zur Längsrichtung der Schwenkachse 20 betrachtet so gestaltet, dass die Drosselklappe 26 ein über die gesamte Breite der Drosselklappe 26 betrachtet tragflächenförmiges Querschnittsprofil aufweist. Des weiteren sind in der Drosselklappe 26 mehrere quer durch die Drosselklappe 26 von der Vorderseite 34 zur Rückseite 24 verlaufende Strömungskanäle 38 ausgebildet, die gleichmäßig über die gesamte angeströmte Fläche der Drosselklappe 26 verteilt sind. Die Strömungskanäle 38 erstrecken sich unter einem vorgegebenen Winkel geneigt zur Vorderseite 34 der Drosselklappe 26, so dass die Strömungskanäle 38 bei geschlossener Drosselklappe 26 parallel zur Strömungsrichtung R des Abgases verlaufen.

Nachfolgend wird die Funktionsweise der erfindungsgemäßen Drosselanordnung 14 näher erläutert.

Im Ausgangszustand wird die Drosselklappe 26 von der Torsionsfeder 28 in ihre geschlossene Stellung gegen die Dichtungselemente 36 mechanisch derart vorgespannt, dass an den mit den Dichtungselementen 36 in Berührung stehenden Kantenbereichen der Drosselklappe 26 kaum Abgas hindurchtreten kann. Strömt nun Abgas in Strömungsrichtung R durch den Abgasstrang 10, verschließt die Drosselklappe 26 den Querschnittsbereich des Abgasstranges 10 im Bereich der Dichtungselemente 36. Lediglich durch die in der Drosselklappe 26 ausgebildeten Strömungskanäle 38 kann ein vorgegebener Volumenstrom des Abgases hindurchströmen.

Nimmt nun die Strömungsgeschwindigkeit des Abgases zu, kommt es zu einer Erhöhung des von der Drosselklappe 26 verursachten Staudruckes. Dabei bewirkt der Staudruck des Fluides durch die zum durchströmten Querschnittsbereich des Abgasstranges 10 seitlich versetzte Anordnung der Schwenkachse 20, dass der Staudruck an der geschlossenen Drosselklappe 26 lediglich ein in die Öffnungsrichtung der Drosselklappe 26 gerichtetes Öffnungsdrehmoment bewirkt, welches dem von der Torsionsfeder 28 erzeugten Schließmoment entgegenwirkt, ohne dass dabei durch den Staudruck gleichzeitig ein in Richtung des Schließmomentes gerichtetes Stützmoment entsteht. Da der Staudruck lediglich ein Öffnungsdrehmoment bewirkt, öffnet sich die Drosselklappe 26, wenn das vom Staudruck erzeugte Öffnungsdrehmoment das von der Torsionsfeder 28 bewirkte Schließdrehmoment übersteigt.

Sobald die Drosselklappe 26 geringfügig geöffnet ist, strömt das Abgas an der Drosselklappe 26 vorbei, wobei die Drosselklappe 26 durch die Haltebügel 22 beabstandet zur Innenwand des Abgasstranges 10 gehalten ist, so dass das Abgas die Drosselklappe 26 beidseitig umströmt. Hierdurch wird der Abgasstrom im wesentlichen nur durch die vom Abgasstrom direkt angeströmte Vorderseite 34 der Drosselklappe 26 gestaut, während der an der Rückseite 24 vorbeiströmende Abgasstrom die Drosselklappe 26 von ihrer Rückseite 24 her abstützt. Dabei wird der Abstützeffekt wird durch das tragflächenförmige Profil der Drosselklappe 26 zusätzlich unterstützt.

Nimmt nun die Strömungsgeschwindigkeit des Abgases weiter zu, öffnet sich die Drosselklappe 26 weiter, da durch die Veränderung des Anströmwinkels des Abgases gegen die Drosselklappe 26 die Stützwirkung des Abgases an der Rückseite 24 der Drosselklappe 26 abnimmt, während sich gleichzeitig die vom Abgas angeströmte Fläche an der Vorderseite 36 der Drosselklappe 26 mit zunehmenden Öffnungsgrad der Drosselklappe 26 verkleinert. Durch die Reduzierung der Stützwirkung einerseits und die Verkleinerung der angeströmten Fläche der Drosselklappe 26 andererseits wird erreicht, dass trotz zunehmender Strömungsgeschwindigkeit der im Abgasstrom wirkende Staudruck zumindest über einen großen Öffnungsbereich der Drosselklappe 26 konstant bleibt. Erst in der vollständig geöffneten Stellung der Drosselklappe 26, wie sie in der Figur in gestrichelten Linien dargestellt ist, nimmt der Staudruck des Abgases mit zunehmender Strömungsgeschwindigkeit kontinuierlich zu.

Nimmt die Strömungsgeschwindigkeit des Abgases wieder ab, schließt sich die Drosselklappe 26 wieder kontinuierlich in Abhängigkeit von der Strömungsgeschwindigkeit des Abgases, wobei der im Abgasstrang 10 vor der Drosselklappe 26 wirkende Staudruck konstant bleibt.

Die zuvor beschriebene erfindungsgemäße Drosselanordnung 14 ist für verschiedenste Anwendungsfälle einsetzbar. So kann die Drosselanordnung 14 zur Beeinflussung der Akustik in einem Schalldämpfer der Abgasanlage eingesetzt werden, um in Abhängigkeit von der Strömungsgeschwindigkeit den vom Abgas zu durchströmenden Weg im Schalldämpfer zu verändern. Ferner ist der Einsatz der Drosselanordnung 14 zum gezielten Umlenken des Abgasstromes in einer Abgasanlage möglich, um das Abgas in Abhängigkeit vom Abgasdurchsatz gegebenenfalls vor einem wärmeempfindlichen Katalysator zu kühlen. Des weiteren ist es möglich, die Drosselanordnung 14 in einer Abgasanlage mit Rußfiltern einzusetzen, wobei jedem Rußfilter eine Drosselklappe 26 mit Strömungskanälen 38 zugeordnet ist, die Drosselklappen 26 jedoch bei unterschiedlichen Staudrükken öffnen, so dass ein Rußfilter, bei dem die Drosselklappe 26 geschlossenen ist, lediglich durch die Strömungskanäle 38 mit einer geringen Menge Abgas versorgt wird, welches zu Regenerationszwecken des Rußfilters mit geringem Aufwand erhitzt werden kann. Die erfindungsgemäße Drosselanordnung 14 kann auch zu einer von der Motorlast abhängigen Drehmomentoptimierung eingesetzt werden, in dem an definierten Stellen der Abgasanlage Drosselklappen 26 angeordnet sind, die in geschlossenem Zustand den Überdruckimpuls beim Öffnen des Auslaßventils des Verbrennungsmotors als Unterdruckimpuls reflektieren. In Abhängigkeit von der Motorlast bleibt dann nur die Drosselklappe 26 geschlossen, die den Überdruckimpuls reflektieren soll.

Diese und weitere Anwendungsbereiche der erfindungsgemäßen Drosselanordnung sind denkbar, wobei der Einsatz der erfindungsgemäßen Drosselanordnung in Abgasanlagen nur einen bevorzugten Anwendungsbereich darstellt.

### Bezugszeichenliste:

- 10: Abgasstrang
- 12: Abgasanlage
- 14: Drosselanordnung
- 16: Seitenwand
- 18: Ausnehmung
- 20: Schwenkachse
- 22: Haltebügel
- 24: Rückseite
- 26: Drosselklappe
- 28: Torsionsfeder
- 30: Schenkelende
- 32: Schenkelende
- 34: Vorderseite
- 36: Dichtungselemente
- 38: Strömungskanäle

## Patentansprüche

1. Drosselanordnung, insbesondere in einer Abgasanlage für einen Verbrennungsmotor, mit einer Drosselklappe (26) zum Drosseln des Volumenstroms eines durch ein Rohr (10) strömenden Fluides, wobei die Drosselklappe (26) zwischen einer geschlossenen Stellung, in die sie vorgespannt ist, um einen vorgegebenen Querschnittsbereich des Rohres (10) zumindest teilweise zu verschließen, und einer offenen Stellung, in der die Drosselklappe (26) den Querschnittsbereich des Rohres (10) durch die Wirkung des Fluiddrucks gegen die Vorspannkraft freigibt, um eine Schwenkachse (20) in das Rohr (10) schwenkbar ist,
**dadurch gekennzeichnet,**
**dass** die Schwenkachse (20) seitlich versetzt zu dem von der Drosselklappe (26) zu verschließenden Querschnittsbereich des Rohres (10) angeordnet ist und
**dass** an der Drosselklappe (26) mindestens ein Abstandshalter (22) vorgesehen ist, mit dem die Drosselklappe (26) in einem vorgegebenen Abstand zur Schwenkachse (20) an der Schwenkachse (20) derart gelagert ist, dass die Drosselklappe (26) in ihrer offenen Stellung vom Fluid beidseitig umströmt ist.

2. Drosselanordnung nach Anspruch 1, **dadurch gekennzeichnet, dass** am Rohr (10) eine seitliche Ausnehmung (28) ausgebildet ist, in der die Schwenkachse (20) ihrerseits gelagert ist.

3. Drosselanordnung nach Anspruch 1 oder 2, **dadurch gekennzeichnet, dass** die Drosselklappe (26) in ihrer geschlossenen Stellung unter einem vorgegebenen Winkel (β) geneigt zur Strömungsrichtung (R) des Fluides verläuft.

4. Drosselanordnung nach Anspruch 1, 2 oder 3, **dadurch gekennzeichnet, dass** der mindestens eine Abstandshalter (22) unter einem vorgegebenen Winkel (α) von der Rückseite (24) der Drosselklappe (26) absteht.

5. Drosselanordnung nach einem der vorhergehenden Ansprüche, **dadurch gekennzeichnet, dass** der Abstandshalter (22) mittig von der Drosselklappe (26) absteht.

6. Drosselanordnung nach einem der vorhergehenden Ansprüche, **dadurch gekennzeichnet, dass** der Querschnitt der Drosselklappe (26) in Richtung quer zur Schwenkachse (20) gesehen ein tragflächenförmiges Profil aufweist.

7. Drosselanordnung nach einem der vorhergehenden Ansprüche, **dadurch gekennzeichnet, dass** die Drosselklappe (26) mit mehreren Strömungskanälen (38) versehen ist, welche sich bei geschlossener Drosselklappe (26) vorzugsweise in Strömungsrichtung (R) des Fluides erstrecken.

8. Drosselanordnung nach einem der vorhergehenden Ansprüche, **dadurch gekennzeichnet, dass** die Drosselklappe (26) in ihrer geschlossenen Stellung an am Querschnittsbereich im Rohr (10) vorgesehenen Dichtungselementen (36) dichtend anliegt.

9. Drosselanordnung nach einem der vorhergehenden Ansprüche, **dadurch gekennzeichnet, dass** die Drosselklappe (26) durch ein elastisches Spannelement, vorzugsweise eine auf die Schwenkachse (20) aufgeschobene Torsionsfeder (28), welche sich am Abstandshalter (16) oder der Drosselklappe (26) einerseits und am Rohr (10) andererseits abstützt, in die geschlossene Stellung vorgespannt ist.

10. Drosselanordnung nach einem der vorhergehenden Ansprüche, **dadurch gekennzeichnet, dass** der von der Drosselklappe zu verschließende Querschnittsbereich die Eintrittsöffnung des Rohres bildet.

11. Drosselanordnung nach einem der vorhergehenden Ansprüche, **dadurch gekennzeichnet, dass** in Strömungsrichtung des Fluides gesehen hinter der Drosselklappe im Rohr eine weitere Drosselklappe vorgesehen ist, welche vorzugsweise nach einem der vorhergehenden Ansprüche 1 bis 9 ausgebildet ist.

12. Abgasanlage für die Abgase eines Verbrennungsmotors, mit mindestens einem Abgasstränge (10), an dem eine Drosselanordnung (14) nach einem der Ansprüche 1 bis 11 vorgesehen ist, wobei die Drosselklappe (26) der Drosselanordnung (14) den Abgasstrang (10) erst ab einem vorgegebenen Volumenstrom des Abgases durch die Abgasanlage (12) öffnet.

13. Abgasanlage nach Anspruch 12, **dadurch gekennzeichnet, dass** die Drosselklappe (26) der Drosselanordnung (14) als Akustikklappe dient und der von ihr zu verschließende Abgasstrang (10) eine Verlängerung des vom Abgas zu durchströmenden Strömungsweges durch die Abgasanlage (12) ist.

14. Abgasanlage nach Anspruch 12, **dadurch gekennzeichnet, dass** der mit der Drosselklappe (26) versehene Abgasstrang (10) als Bypass dient, mit dem der Abgasstrom parallel an einem mit einem anderen Abgasstrang verbundenen NOₓ-Speicherkatalysator der Abgasanlage (12) vorbei einem Abgaskühler zuzuleiten ist, welcher den gekühlten Abgasstrom dem NOₓ-Speicherkatalysator anschließend zuleitet.

15. Abgasanlage nach Anspruch 12, **dadurch gekennzeichnet, dass** Abgasstränge mit unterschiedlichen Längen vorgesehen sind, wobei jeder Abgasstrang (10) durch eine Drosselklappe (26) zu verschließen ist, und dass die Drosselklappen (26) in Abhängigkeit von der Drehzahl des Verbrennungsmotors zur Drehmomentoptimierung bei unterschiedlichen Abgasdurchsätzen öffnen.

16. Abgasanlage nach Anspruch 12, **dadurch gekennzeichnet, dass** der von der Drosselklappe (26) zu verschließende Abgasstrang (10) den Abgasstrom an einem Wärmetauscher für den Kühlwasserkreislauf oder den Ölkreislauf des Verbrennungsmotors vorbeileitet, wobei die Drosselklappe (26) erst ab einem vorgegebenen Abgasdurchsatz öffnet.

17. Abgasanlage nach Anspruch 12, **dadurch gekennzeichnet, dass** sich in Strömungsrichtung des Abgases gesehen an jeden Abgasstrang (10) ein Rußfilter anschließt, wobei einer der Abgasstränge (10) mit eine Drosselanordnung (14) nach einem der vorhergehenden Ansprüche 1 bis 11 versehen ist.
